# EUROPÄISCHE PATENTSCHRIFT

(11) **EP 3 225 851 B1**
(45) Veröffentlichungstag und Bekanntmachung des Hinweises auf die Patenterteilung: **16.10.2019**
(21) Anmeldenummer: 17162395.2
(22) Anmeldetag: 22.03.2017
(51) Int. Cl.: F04D 9/00, F04D 29/42, F04D 1/00, F16K 15/18, F16K 24/00, F16K 15/06

(54) **WASSERPUMPE MIT RÜCKSCHLAGVENTIL**
WATER PUMP WITH CHECK VALVE
POMPE À EAU COMPRENANT UN CLAPET ANTI-RETOUR

(30) Priorität: 01.04.2016 DE 102016106039
(43) Veröffentlichungstag der Anmeldung: 04.10.2017
(73) Patentinhaber: Oase GmbH, 48477 Hörstel-Riesenbeck (DE)
(72) Erfinder: Ansgar, Paul, 26133 Oldenburg (DE)
(74) Vertreter: Engelmann, Kristiana

(56) Entgegenhaltungen:
- DE-A1- 3 104 362
- DE-A1-102005 036 136
- DE-A1-102005 045 861
- FR-A1- 2 503 319
- GB-A- 191 217 796

## Beschreibung

Die Erfindung betrifft eine Wasserpumpe, insbesondere zum Einsatz als Gartenpumpe oder Hauswasserwerk, nach dem Oberbegriff des Anspruchs 1. Die Pumpe verfügt über ein Rückschlagventil, das über eine Betätigungseinrichtung in eine Entlüftungsstellung gebracht werden kann.

Z.B. Gartenpumpen sind in der Regel selbstansaugende Pumpen. Um zu verhindern, dass die Wassersäule bei Stillstand der Pumpe in der Saugleitung absackt, wodurch bei jedem Betriebsbeginn der Ansaugvorgang von neuem wiederholt werden müsste, sind derartige Pumpen mit einem Rückschlagventil ausgestattet.

Vor der ersten Inbetriebnahme der Pumpe muss der Pumpraum mit Wasser befüllt werden, damit die Selbstansaugung funktioniert. Dazu ist das Rückschlagventil zu öffnen, damit Wasser in den Pumpraum fließen kann, weil der Wasserdruck des einfließenden Wassers beim reinen Befüllen nicht ausreicht, um das Rückschlagventil selbstständig zu öffnen.

Im Stand der Technik sind daher bereits Konstruktionen bekannt, bei denen das Rückschlagventil manuell in eine Entlüftungsstellung gebracht werden kann. So beschreibt die DE 10 2005 045 861 A1 eine Pumpenkonstruktion, bei der eine orthogonal zur Ventilachse verschiebliche Betätigungseinrichtung das Rückschlagventil zu Entlüftungszwecken während des Pumpenbetriebs aufschieben und in dieser Position fixieren kann. Diese Konstruktion ist jedoch in ihrer Funktion und Zuverlässigkeit eingeschränkt, da das Rückschlagventil dort leicht verkantet und die Gesamtkonstruktion einen hohen Verschleiß aufweist. Ferner offenbart DE 10 2005 036136 A1 ebenfalls eine Wasserpumpe gemäß dem Oberbegriff des Anspruchs 1.

Der Erfindung liegt daher die Aufgabe zugrunde, eine gattungsgemäße Pumpe diesbezüglich konstruktiv zu verbessern. Dies Aufgabe wird durch eine Wasserpumpe mit den Merkmalen des Anspruchs 1 gelöst.

Durch die erfindungsgemäße koaxiale Anordnung der Betätigungseinrichtung zur Ventilachse des Rückschlagventils wirken bei der erfindungsgemäßen Konstruktion durch die Betätigungseinrichtung keine seitlichen Kräfte. Bei einer rein koaxialen Anordnung werden auch notwendige Dichtungen nicht mit seitlich wirkenden Kräften belastet und verschleißen daher viel langsamer als bei vorbekannten Konstruktionen. Die erfindungsgemäße koaxiale Krafteinwirkung auf das Rückschlagventil verhindert auch, dass dieses wie beim Stand der Technik oftmals verkantet, da orthogonal zur Hauptverschlussrichtung des Rückschlagventils gerichtete zusätzliche Kräfte vollständig vermieden werden.

Bevorzugt ist die erfindungsgemäße Wasserpumpe so ausgestaltet, dass sich die Betätigungseinrichtung auf der Öffnungsseite des Rückschlagventils befindet und das Bedienelement über Zugkraft auf den Ventilkörper einwirkt. Insbesondere ist dazu am Ventilkörper ein Mitnehmer vorgesehen, über den durch Zug an dem Bedienelement das Rückschlagventil in die Entlüftungsstellung geöffnet werden kann. Das Bedienelement ist dazu bevorzugt als manuell zu betätigender Entlüftungsknopf ausgeführt.

Der Mitnehmer kann einstückig mit dem Ventilkörper ausgebildet sein und sich beispielsweise käfigartig um eine Verbreiterung des Bedienelementes herum erstrecken. Selbstverständlich ist auch eine umgekehrte Konstruktion möglich, bei der das Bedienelement ein Mitnehmerteil des Rückschlagventils umgreift. Der Mitnehmer kann insbesondere aus Stabilitäts- und Fertigungsgründen bevorzug einstückig mit dem Ventilkörper ausgebildet sein.

Da zur Initialbefüllung der Pumpe mit Wasser eine leicht geöffnete Entlüftungsstellung des Rückschlagventils ausreichend ist, muss auch das Bedienelement der Betätigungseinrichtung nur einen kurzen Verschiebeweg vollführen. Um anschließend bei Inbetriebnahme der Pumpe den vollen Wasserdurchfluss und die vollständige Öffnung des Rückschlagventils zu gewährleisten, kann es daher vorteilhaft sein, im Rahmen der Halterung zwischen Mitnehmer und Bedienelement in der Richtung der Ventilachse einen Bewegungsfreiraum vorzusehen, dadurch lässt sich das Rückschlagventil durch den anstehenden Pumpensaugdruck vollständig öffnen, ohne dass das Bedienelement der Betätigungseinrichtung weiterbewegt werden muss.

Erfindungsgemäß ist die Betätigungseinrichtung so ausgestaltet, dass sie zwar manuell sich in eine Entlüftungsstellung bringen lässt, jedoch bei Abschalten der Pumpe nach deren Benutzung eine automatische Rückkehr des Rückschlagventil in vollkommen geschlossene Position ermöglicht, ohne dass es einer weiteren manuellen Einwirkung bedarf. Dazu ist eine kraftschlüssige Fixierung des Bedienelementes der Betätigungseinrichtung gewählt. Bevorzugt kann dies über die Reibkraft der ohnehin notwendigen Dichtungselemente geschehen. Die eingebrachte Fixierungs- bzw. Reibkraft ist dabei so auszulegen, dass sie größer als eine für die Funktion des Rückschlagventils zwingend vorhandene Vorspannkraft des Rückschlagventils ist, damit die manuell eingestellte Entlüftungsstellung über den Befüllungsvorgang der Pumpe erhalten bleibt. Andererseits ist die Fixierungskraft der Betätigungseinrichtung jedoch kleiner auszulegen als die auf das Rückschlagventil bei Abschaltung der Pumpe wirkende Rückstellkraft, die sich in der Regel aus der Summe der Vorspannkraft und einer Druckkraft der anstehenden Wassersäule ergibt. Dadurch wird das Rückschlagventil bei Abschalten der Pumpe automatisch in seine vollständig geschlossene Position zurückgedrückt, ohne dass manuell die Fixierung der Betätigungseinrichtung gelöst werden muss.

Weitere Vorteile und Einzelheiten ergeben sich aus den Unteransprüchen sowie einem in den Zeichnungen dargestellten Ausführungsbeispiel der Erfindung, das im Folgenden erläutert wird; es zeigen:
- Fig. 1:: Eine erfindungsgemäße Pumpe im Schnitt,
- Fig. 2:: Eine Teildarstellung entsprechend Fig. 1 beim Befüllen der Pumpe,
- Fig. 3:: Den Gegenstand aus Fig. 2 im Betriebszustand der Pumpe und
- Fig. 4:: Den Gegenstand aus Fig. 2 bei abgeschalteter Pumpe.

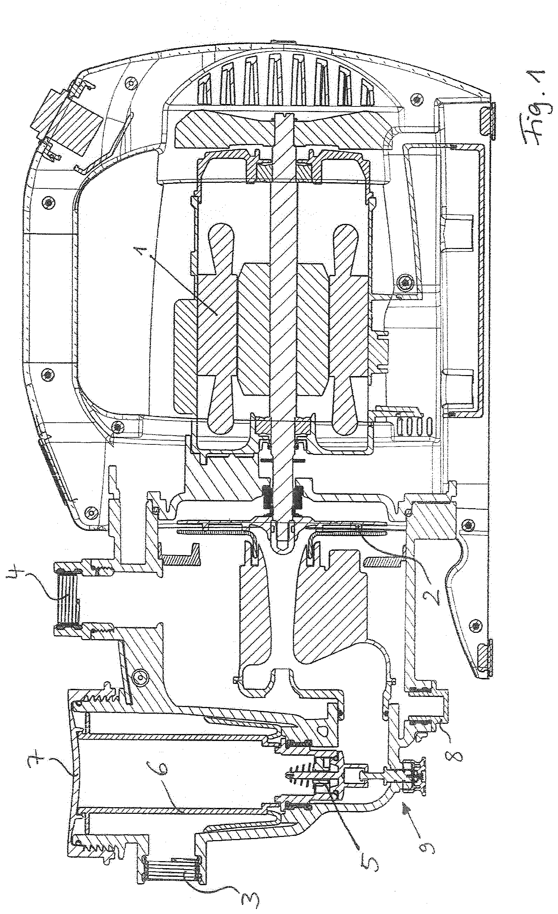

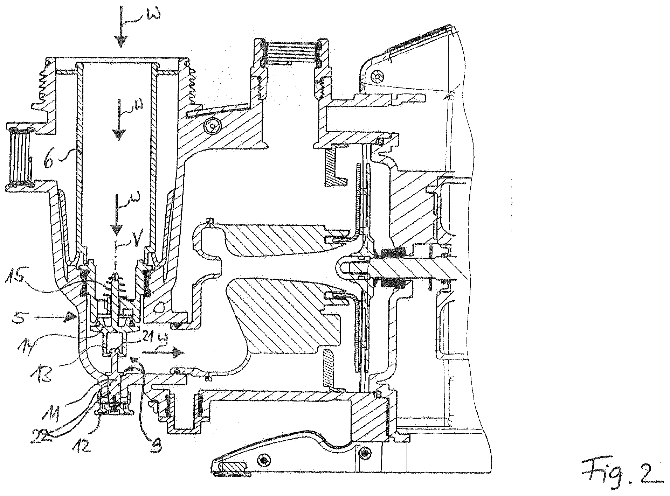

Die in Fig. 1 einmal vollständig dargestellte Pumpe verfügt über einen Motor 1, der ein Laufrad 2 antreibt. Damit kann über einen Ansaugstutzen 3 Wasser angesaugt und über einen Druckstutzen 4 wieder abgegeben werden. Im Saugbereich befindet sich ein Rückschlagventil 5, dem ein Filter 6 vorgeschaltet ist. Der Filter 6 kann durch eine obenseitige Öffnung, die mit einem Filterdeckel 7 verschlossen ist, eingesetzt und ausgewechselt werden. Im unteren Bereich des Druckraumes befindet sich eine Ablassschraube 8, über die verbleibendes Wasser aus der Pumpe abgelassen werden kann, wenn diese außer Betrieb gesetzt werden soll. Mit dem Rückschlagventil 5 steht eine Betätigungseinrichtung 9 für eine Entlüftung der Pumpe beim Befüllungsvorgang in Verbindung. Die Funktion der Betätigungseinrichtung 9 und deren Zusammenwirken mit dem Rückschlagventil 5 wird anhand der folgenden Fig. 2 bis 4 näher erläutert.

Fig. 2 zeigt den Befüllungsvorgang, bei dem die Pumpe vor dem erstmaligen Starten des Motors 1 mit Wasser (symbolisiert durch die Pfeile W) befüllt wird, damit beim Starten des Motors die Selbstansaugung der Pumpe funktioniert. Am einfachsten geschieht diese Erstbefüllung, indem der Filterdeckel 7 abgeschraubt und Wasser W durch den Filter 6 eingefüllt wird. Damit das Wasser auch den Pumpenraum hinter dem Rückschlagventil 5 füllen kann, wird das Rückschlagventil 5 über die Betätigungseinrichtung 9 in die in Fig. 2 dargestellte leicht geöffnete Entlüftungsstellung gebracht. Dies geschieht bei der dargestellten Ausführungsform, indem ein Bedienelement 11 der Betätigungseinrichtung 9 koaxial zur Ventilachse V über einen Entlüftungsknopf 12 nach unten gezogen wird. Das Bedienelement 11 ist dazu schiebebeweglich mit einem Mitnehmer 13 verbunden, der bei der dargestellten Ausführungsform einstückig an einen Ventilkörper 14 des Rückschlagventils 5 angeformt ist. Eine pilzkopfartige Verdickung 21 des Bedienelementes 11 zieht dabei den Mitnehmer 13 und darüber den Ventilkörper 14 entgegen der Vorspannkraft des Rückschlagventils 5 nach unten. Die Vorspannkraft wird bei der dargestellten Ausführungsform durch eine Feder 15 des Rückschlagventils 5 aufgebracht. Die leicht geöffnete Entlüftungsstellung wird kraftschlüssig fixiert durch Reib- bzw. Klemmkräfte, die über gleichzeitig abdichtende O-Ringe 22 des Bedienelementes 11 aufgebracht werden.

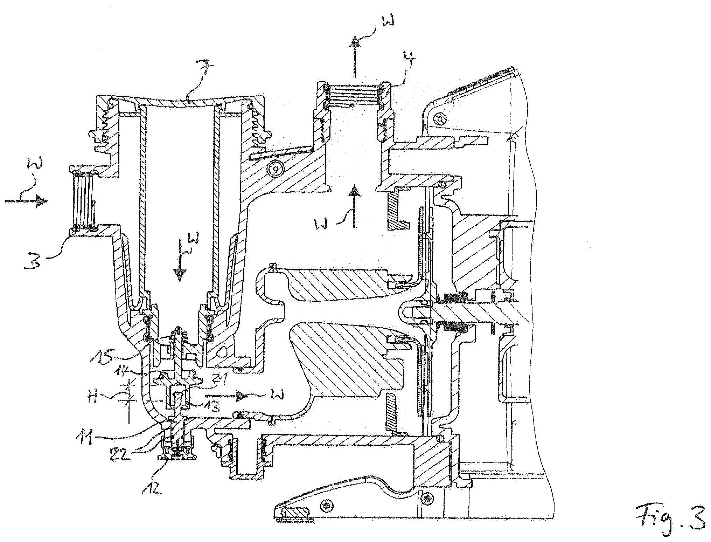

Fig. 3 zeigt die Pumpe während des Förderns, d.h. nach abgeschlossenem Befüllungsvorgang gemäß Fig. 2. Dazu wurde in Fig. 3 der Filterdeckel 7 wieder aufgesetzt und der Motor 1 gestartet. Der Motor 1 saugt nun über das Laufrad 2 Wasser W durch den Ansaugstutzen 3 an und fördert dieses durch den Druckstutzen 4 hinaus. Durch den auf der Saugseite anstehenden Wasserdruck wird dabei das Rückschlagventil 5 entgegen der Vorspannkraft der Feder 15 in die in Fig. 3 dargestellte vollständige Öffnungsposition bewegt.

Konstruktiv und insbesondere aus Dichtigkeitsgründen ist es vorteilhaft, die Bewegung 11 des Bedienelementes möglichst klein zu halten. Damit folglich das Bedienelement 11 zum Erreichen der vollständigen Öffnungsposition gemäß Fig. 3 des Rückschlagventils 5 keine weitere Bewegung vollführen muss, ist zwischen dem Bedienelement 11 und dem Mitnehmer 13 ein Bewegungsfreiraum H nach Art eines Freihubs vorgesehen. Bei der dargestellten Ausführungsform taucht dabei das obere Ende mit seiner Verdickung 21 des Bedienelementes 11 in die käfigartige Öffnung des Mitnehmers 13 ein, ohne dass das Bedienelement 11 eine weitere Bewegung vollführt.

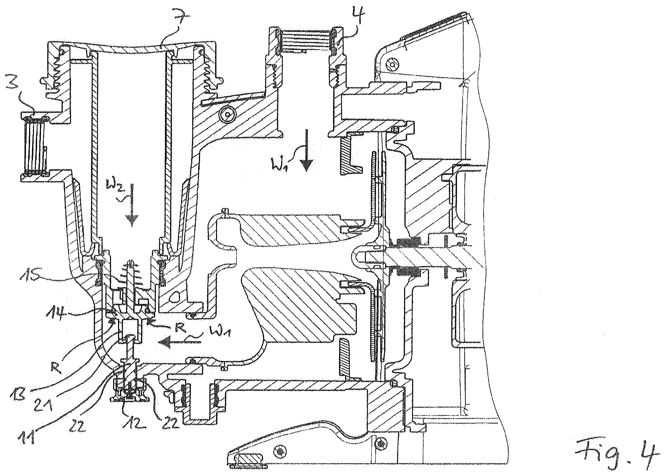

Fig. 4 schließlich zeigt die Pumpe bei abgeschaltetem Motor 1, d. h. in einer Funktionsstellung in der sie nicht fördert. Dabei sinkt eine Wassersäule aus den Druckstutzen 4 zurück in Richtung der Pfeile W1. Demgegenüber steht nur ein geringerer Wasserdruck W2 auf der Filterseite. Der Wasserdruck W1 wirkt auf die mit R bezeichnete Rückstellfläche des Rückschlagventilkörpers 14 und drückt diesen in die in Fig. 4 und Fig. 1 dargestellte vollständig geschlossene Position zurück. Die Rückstellkraft, die sich aus dem Wasserdruck W1 und der Vorspannkraft der Feder 15 zusammensetzt, ist dabei größer als die Fixierungskraft bzw. Reib-/Klemmkraft, aufgebracht durch die O-Ringe 22, des Bedienelementes 11 und der Druck, der auf der Filterseite verbleibenden Wassersäule W2. Das Rückschlagventil 5 nimmt daher in der in Fig. 4 dargestellten Position bei abgeschaltetem Motor 1 über den Mitnehmer 13 am Ventilkörper und die Verdickung 21 des Bedienelementes 11 die Betätigungseinrichtung 9 vollständig mit zurück in die Ursprungsposition, ohne dass es irgendeiner manuellen Betätigung bedarf. Das Rückschlagventil 5 funktioniert daher selbsttätig, und es kann keine Problematik entstehen, wenn vergessen wurde, die initiierte Entlüftungsstellung zu beenden, wie es bei einigen Pumpen aus dem Stand der Technik der Fall ist.

Die erfindungsgemäße Pumpe arbeitet somit fehlbedienungssicher. Da über die Betätigungseinrichtung 9 für die Entlüftung keine Querkräfte in das Rückschlagventil 5 eingebracht werden, funktioniert auch dieses verkantungsfrei. Auch vorhandene Dichtungselemente müssen weniger Querkräfte als bei Modellen des Standes der Technik aufnehmen, so dass die Pumpe wesentlich weniger verschleißanfällig ist. Die Konstruktion ist hingegen einfach, so dass sich die Herstellungs- und Montagekosten der Pumpe gegenüber dem Stand der Technik zusätzlich verringern lassen.

## Patentansprüche

1. Wasserpumpe mit einem im Saugbereich der Wasserpumpe angeordneten Rückschlagventil (5), dessen Ventilkörper (14) in Richtung einer Ventilachse (V) zwischen einer geöffneten und einer geschlossenen Position beweglich angeordnet ist, wobei das Rückschlagventil (5) mit einer Betätigungseinrichtung (9) verbunden ist, über die es in eine Entlüftungsstellung überführbar ist,
**dadurch gekennzeichnet,**
**dass** die Betätigungseinrichtung (9) ein koaxial zu der Ventilachse (V) verschiebliches Bedienelement (11) aufweist, das am Ventilkörper (14) angreift und derart angeordnet ist, dass es den Ventilkörper (14) durch koaxiale Krafteinwirkung in die zumindest leicht geöffnete Entlüftungsstellung überführen kann, und
**dass** die Betätigungseinrichtung (9) eine kraftschlüssige Fixierung des Bedienelements (11) aufweist, wobei die durch die Fixierung des Bedienelements (11) aufgebrachte Kraft größer als eine Vorspannkraft des Rückschlagventils (5) und kleiner als eine konstruktiv vorgegebene Rückstellkraft ist, die bei einem Abschaltvorgang der Pumpe auf das Rückschlagventil (5) wirkt.

2. Wasserpumpe nach Anspruch 1, **dadurch gekennzeichnet, dass** die Betätigungseinrichtung (9) auf der Öffnungsseite des Rückschlagventils (5) und das Bedienelement (11) derart angeordnet ist, dass es durch Zugkrafteinwirkung auf einen mit dem Ventilkörper (14) verbundenen Mitnehmer (13) den Ventilkörper (14) in die Entlüftungsstellung überführen kann.

3. Wasserpumpe nach Anspruch 2, **dadurch gekennzeichnet, dass** der Mitnehmer (13) einstückig mit dem Ventilkörper (14) ausgebildet ist.

4. Wasserpumpe nach Anspruch 3, **dadurch gekennzeichnet, dass** das Bedienelement (11) koaxial zur Ventilachse (V) verschieblich an dem Mitnehmer (13) gehalten ist.

5. Wasserpumpe nach Anspruch 4, **dadurch gekennzeichnet, dass** die Halterung zwischen Mitnehmer (13) und Bedienelement (11) in der Richtung der Ventilachse (V) einen Bewegungsfreiraum (H) aufweist, der das vollständige Öffnen des Rückschlagventils (5) ohne weitere Bewegung des Bedienelements (11) ermöglicht.

## Claims

1. Water pump comprising a check valve (5) arranged in the suction region of the water pump, the valve body (14) of which valve is arranged such that it can move in the direction of a valve axis (V) between an open and a closed position, the check valve (5) being connected to an actuation device (9) by means of which said valve can be transferred into a ventilation position, **characterised in that** the actuation device (9) has an operating element (11) which can be moved coaxially to the valve axis (V), acts on the valve body (14) and is arranged such that it can transfer the valve body (14) into the at least slightly open ventilation position by applying a coaxial force, and **in that** the actuation device (9) has a frictional fixing of the operating element (11), the force applied by the fixing of the operating element (11) being greater than a pretensioning force of the check valve (5) and smaller than a structurally predetermined restoring force which acts on the check valve (5) when the pump is being switched off.

2. Water pump according to claim 1, **characterised in that** the actuation device (9) is located on the opening side of the check valve (5) and the operating element (11) is arranged such that it can transfer the valve body (14) into the ventilation position by applying a tensile force on a driver (13) connected to the valve body (14).

3. Water pump according to claim 2, **characterised in that** the driver (13) is integrally formed with the valve body (14).

4. Water pump according to claim 3, **characterised in that** the operating element (11) is held on the driver (13) such that it can move coaxially to the valve axis (V).

5. Water pump according to claim 4, **characterised in that** the mounting between the driver (13) and operating element (11) has a movement space (H) in the direction of the valve axis (V), which space allows the check valve (5) to open completely without further movement of the operating element (11).

## Revendications

1. Pompe à eau ayant un clapet anti-retour (5) agencé dans la zone d'aspiration de la pompe à eau, dont le corps de clapet (14) est agencé de manière mobile entre une position ouverte et une position fermée dans la direction d'un axe de clapet (V), dans lequel le clapet anti-retour (5) est relié à un appareil d'actionnement (9), via lequel il peut être amené dans une position de purge,
**caractérisé en ce que**
l'appareil d'actionnement (9) présente un élément de commande coulissant (11) coaxial à l'axe de clapet (V), qui agit sur le corps de clapet (14) et est agencé de sorte qu'il peut amener le corps de clapet (14) dans la au moins une position de purge légèrement ouverte par application d'une force coaxiale, et
**en ce que** l'appareil d'actionnement (9) présente une fixation par liaison de force de l'élément de commande (11), dans lequel la force appliquée par la fixation de l'élément de commande (11) est supérieure à une force de précontrainte du clapet anti-retour (5) et inférieure à une force de rappel prédéterminée constructive, qui agit sur le clapet anti-retour (5) lors d'une opération de coupure de la pompe.

2. Pompe à eau selon la revendication 1, **caractérisée en ce que** l'appareil d'actionnement (9) est agencé au niveau du côté d'ouverture du clapet anti-retour (5) et de l'élément de commande (11) de sorte qu'il peut amener le corps de clapet (14) dans la position de purge par application d'une force de traction sur un élément d'entraînement (13) relié au corps de clapet (14).

3. Pompe à eau selon la revendication 2, **caractérisée en ce que** l'élément d'entraînement (13) est réalisé d'un seul tenant avec le corps de clapet (14).

4. Pompe à eau selon la revendication 3, **caractérisée en ce que** l'élément de commande (11) est fixé à l'élément d'entraînement (13) coulissant coaxialement par rapport à l'axe de clapet (V).

5. Pompe à eau selon la revendication 4, **caractérisée en ce que** la fixation entre l'élément d'entraînement (13) et l'élément de commande (11) présente un dégagement de déplacement (H) dans la direction de l'axe de clapet (V), qui permet l'ouverture complète du clapet anti-retour (5) sans déplacement supplémentaire de l'élément de commande (11).
